## Europäisches Patentamt

## European Patent Office

## Office européen des brevets

(11) Veröffentlichungsnummer: **0 284 944 B1**

(12) **EUROPÄISCHE PATENTSCHRIFT**

(45) Veröffentlichungstag der Patentschrift: **24.06.92**

(21) Anmeldenummer: **88104508.2**

(22) Anmeldetag: **21.03.88**

(51) Int. Cl.⁵: **B01J 47/00**, C02F 1/42

(54) Verfahren zum Verändern der Kapazität eines Ionenaustauschers für ein bestimmtes chemisches Element.

(30) Priorität: **02.04.87 DE 3711018**

(43) Veröffentlichungstag der Anmeldung:
**05.10.88 Patentblatt 88/40**

(45) Bekanntmachung des Hinweises auf die
Patenterteilung:
**24.06.92 Patentblatt 92/26**

(84) Benannte Vertragsstaaten:
**BE CH DE ES FR GB IT LI NL SE**

(56) Entgegenhaltungen:
**DE-A- 3 005 163**
**NL-A- 6 405 199**
**US-A- 2 830 874**
**US-A- 3 835 001**
**US-A- 4 098 691**

**OIL & GAS JOURNAL, Band 78, Nr. 23, 9. Juni
1980, Seiten 56-61, Tulsa, Oklahoma, US; L.C.
HALE et al.: "New water treatment can whip
heavy metals problem"**

(73) Patentinhaber: **SIEMENS AKTIENGESELL-
SCHAFT**
**Wittelsbacherplatz 2**
**W-8000 München 2(DE)**

(72) Erfinder: **Meyer zu Schwabedissen, Christian**
**Veitsbronnerstrasse 10**
**W-8522 Herzogenaurach(DE)**
Erfinder: **Habeck, Karl, Dipl. Ing.**
**Ludwigstrasse 5**
**W-8530 Neustadt/Aisch(DE)**
Erfinder: **Schweighofer, Werner**
**Stettinerstrasse 12**
**W-8520 Erlangen(DE)**
Erfinder: **Siewert-Posielek, Brigitte, Dipl. Ing.**
**Kalkofenstrasse 7**
**W-8566 Leinburg(DE)**
Erfinder: **Seifert, Klaus, Dipl. Ing.**
**Pfarrer-Schwarz-Strasse 19**
**W-8721 Schwebheim(DE)**

## Beschreibung

Die Erfindung betrifft ein Verfahren zum Verändern einer vorhandenen Kapazität eines Ionenaustauschers, insbesondere eines Ionenaustauschers, der zum Reinigen des Primärkühlmittels aus dem Primärkreis einer Druckwasser-Reaktoranlage eingesetzt ist, für ein bestimmtes chemisches Element, insbesondere für Antimon.

Aus der US-A-2 830 874 ist ein Ionenaustauschverfahren bekannt. Der dort beschriebene Ionenaustauscher hat für das zu entfernende Ion zunächst überhaupt keine Kapazität. Eine Kapazität wird erst dadurch geschaffen, daß ein Kation in ein Anion umgewandelt wird. Bei anderen Bedingungen kann auch die Umwandlung eines Anions in ein Kation sinnvoll sein. Gemäß der US-A-2 830 874 wird eine Kapazität für ein Ion überhaupt erst bereitgestellt.

Falls ein Ionenaustauscher bereits eine geringe Kapazität für ein bestimmtes Ion hat, kann diese mit bekannten Mitteln weder gesteigert noch erniedrigt werden.

Die Kapazität (Aufnahmefähigkeit) eines Ionenaustauschers für ein bestimmtes Element ist unter anderem vom chemischen Status dieses Elementes im zu reinigenden Medium abhängig. Im Primärkühlmittel einer Druckwasser-Reaktoranlage ist der chemische Status von Antimon derart, daß die Kapazität eines Ionenaustauschers im Primärkreis für Antimon sehr gering ist. Eine Steigerung der Kapazität durch eine volumenmäßige Vergrößerung der Ionenaustauscher im Primärkreis müßte wegen der sehr geringen Kapazität sehr groß sein. Derartige große Ionenaustauscher, bzw. eine Kombination von Ionenaustauschern benötigen einerseits zu viel Raum und sind andererseits unwirtschaftlich. Hinzu kommt, daß bisher eine Regeneration der Ionenaustauscherharze nach dem Einsatz im Primärkreis eines Druckwasser-Reaktors nicht vorgesehen ist. Folglich würde durch den Einsatz größerer Ionenaustauscher der Verbrauch von Harzen in einem solchen Maße steigen, daß die Kosten und der Aufwand für Lagerhaltung und Beseitigung der Harze zu groß wäre.

Daher wurde bisher ein konsequenter Entzug von Antimon aus dem Primärkühlmittel von Druckwasser-Reaktoranlagen nicht vorgenommen.

Der Erfindung lag die Aufgabe zugrunde, ein Verfahren zu entwickeln, durch das die Kapazität eines Ionenaustauschers für ein bestimmtes chemisches Element ohne Vergrößerung des Volumens des Ionenaustauschers und ohne Eingriff in die Chemie des durch den Reaktor strömenden Primärwassers vergrößert wird.

Es sollte außerdem ein Verfahren entwickelt werden, durch das die Kapazität des Ionenaustauschers für das bestimmte chemische Element verringert wird, um eine selektive Regeneration des Ionenaustauschers durchführen zu können.

Die erstgenannte Aufgabe wird gemäß der Erfindung dadurch gelöst, daß zur Steigerung der Kapazität des Ionenaustauschers für das chemische Element das Redoxpotential des chemischen Elementes in einer zu reinigenden Flüssigkeit unmittelbar vor dem Ionenaustauscher erhöht wird, wobei eine Umwandlung von Kation in Anion oder umgekehrt ausgeschlossen sein soll, und daß dazu zugefügte Stoffe unmittelbar hinter dem Ionenaustaucher entfernt werden.

Der chemische Status der Elemente im Primärkühlmittel eines Druckwasser-Reaktors ist durch Kühlmittelparameter vorgegeben, die so gewählt sind, daß eine optimale Betriebssicherheit gegeben ist. Es ist also nicht möglich, diese Kühlmittelparameter zu ändern. Mit dem Verfahren nach der Erfindung bleibt einerseits das Kühlmittel, das durch den Reaktor strömt, unverändert. Andererseits werden gezielt vor dem Ionenaustauscher Eingriffe vorgenommen, die den chemischen Status des zu entfernenden Elementes, nämlich das Redoxpotential, gezielt beeinflussen. Die Kapazität des Ionenaustauschers für das bestimmte Element wird dadurch verändert. Damit die zur Veränderung des chemischen Status des Elementes notwendigen Eingriffe, die beispielsweise die Zugabe von Chemikalien einschließen, für den Reaktor nicht schädlich sind, werden die Eingriffe unmittelbar hinter dem Ionenaustauscher wieder rückgängig gemacht. Zugefügte Stoffe werden beispielsweise aus der Flüssigkeit entfernt.

Mit der Erfindung wird die Chemie des Kühlmittels gezielt nur für den Durchfluß durch den Ionenaustauscher verändert. Alle Veränderungen werden unmittelbar nach dem Ionenaustauscher rückgängig gemacht. Im größten Teil des Primärkreislaufes, insbesondere im Reaktor, fließt durch den Eingriff nach der Erfindung unverändertes Primärkühlmittel.

Mit dem Verfahren nach der Erfindung wird der Vorteil erzielt, daß die Kapazität eines Ionenaustauschers für ein bestimmtes chemisches Element, das insbesondere Antimon ist, bei gleich guter Kühlung des Reaktors soweit vergrößert wird, daß man zur fast vollständigen Entfernung des Antimons auf wirtschaftliche Weise mit nur einem handelsüblichen Ionenaustauscher auskommt.

Damit ein Ionenaustauscher mehr von einem bestimmten chemischen Element aufnehmen kann, wird das Redoxpotential dieses Elementes erhöht. Das geschieht in der zu reinigenden Flüssigkeit unmittelbar vor dem Ionenaustauscher. Falls Antimon aus der zu reinigenden Flüssigkeit entfernt werden soll, wird dessen Redoxpotential derart geändert, daß das Antimon dann in seiner fünfwertigen Form vorliegt. Die Kapazität eines Ionenaustauschers für fünfwertiges Antimon ist erheblich größer als die Kapazität für Antimon mit üblichem chemischem Status.

Durch die Anhebung des Redoxpotentials erzielt man den Vorteil, daß zum Zurückhalten des Antimons ein relativ kleiner, kostengünstiger Ionenaustauscher ausreicht.

Zur Veränderung des Redoxpotentials bzw. der Wertigkeit von Antimon wird der zu reinigenden Flüssigkeit unmittelbar vor dem Ionenaustauscher beispielsweise Sauerstoff zugeführt. Der gleiche Effekt wird nach einem anderen Beispiel durch Zugabe von Wasserstoffperoxid erzielt. Sauerstoff oder Wasserstoffperoxid sind geeignete Chemikalien, um Antimon in seine fünfwertige Form überzuführen, wodurch eine erheblich größere Menge Antimon im Ionenaustauscher zu binden sind.

Damit die zugefügten Chemikalien, beispielsweise Sauerstoff oder Wasserstoffperoxid beim Einsatz des Verfahrens nach der Erfindung im Primärkreislauf eines Druckwasserreaktors die Eigenschaften des Primärkühlmittels nicht beeinträchtigen, wird die zugefügte Substanz hinter dem Ionenaustauscher wieder aus dem Kreislauf entfernt. Zum Abscheiden von Sauerstoff dient beispielsweise ein Entgaser, der dem Ionenaustauscher in Strömungsrichtung nachgeschaltet ist.

Die zweite Aufgabe, ein Verfahren zum Verringern der Kapazität eines Ionenaustauschers für ein bestimmtes chemisches Element anzugeben, wird gemäß der Erfindung dadurch gelöst, daß zur Verringerung der Kapazität des Ionenaustauschers zum Zweck der selektiven Regeneration des mit dem chemischen Element gesättigten Ionenaustauschers das Redoxpotential des chemischen Elementes im Ionenaustauscher verringert wird, wobei eine Umwandlung von Kation in Anion oder umgekehrt ausgeschlossen sein soll.

Dabei wird, falls der Ionenaustauscher mit einem bestimmten chemischen Element, beispielsweise mit Antimon, gesättigt ist, der chemische Status dieses Elementes wieder dahingehend verändert, daß es im Ionenaustauscher nicht mehr gehalten wird. Zum selektiven Entfernen von Antimon aus dem Ionenaustauscher wird das Antimon im Ionenaustauscher wieder auf seine ursprüngliche Wertigkeit gebracht. Für diese Form des Antimons ist zwar eine Kapazität des Ionenaustauschers, aber nur eine sehr geringe Kapazität gegeben, so daß das Antimon aus dem Ionenaustauscher herausgespült wird.

Mit diesem Verfahren nach der Erfindung wird der Vorteil erzielt, daß ein gesättigter Ionenaustauscher schnell und einfach selektiv regeneriert, d.h. von einem bestimmten chemischen Element, wie Antimon, befreit werden kann.

Zur Regeneration wird der Ionenaustauscher vom Kreislauf der zu reinigenden Flüssigkeit, der der Primärkreislauf eines Druckwasserreaktors sein kann, getrennt. Beispielsweise wird jedoch während der selektiven Regeneration als Spülflüssigkeit Primärkühlmittel durch den Ionenaustauscher geleitet.

Zur Erniedrigung des Redoxpotentials des im Ionenaustauscher enthaltenen Antimons wird der durch den Ionenaustauscher zu leitenden Flüssigkeit unmittelbar vor dem Ionenaustauscher beispielsweise Wasserstoff oder Hydrazin zugeführt.

Mit der erfindungsgemäßen selektiven Regeneration des Ionenaustauschers ist dieser mit nur kurzen Wartungsperioden oft einsetzbar, was den Aufwand und die Kosten für neue Ionenaustauscherharze und für die Beseitigung gebrauchter Harze niedrig hält.

Mit der Erfindung wird insbesondere der Vorteil erzielt, daß mit einem chemischen Verfahren, das nur kostengünstige Chemikalien verwendet, Antimon weitgehend vollständig aus einer zu reinigenden Flüssigkeit, die insbesondere Primärkühlmittel eines Druckwasserreaktors ist, entfernt wird. Dazu kommt man mit einem handelsüblichen, verhältnismäßig kleinen Ionenaustauscher aus. Dieser ist mit gleichbleibender Zuverlässigkeit mehrmals einsetzbar, da das erfindungsgemäße Verfahren auch eine selektive Entfernung von Antimon aus dem Ionenaustauscher durch zeitweiliges Absenken der Kapazität umfaßt. Es wird also eine umfassende Entfernung von Antimon aus dem Primärkühlmittel einer Druckwasser-Reaktoranlage mit der Erfindung erstmals ermöglicht.

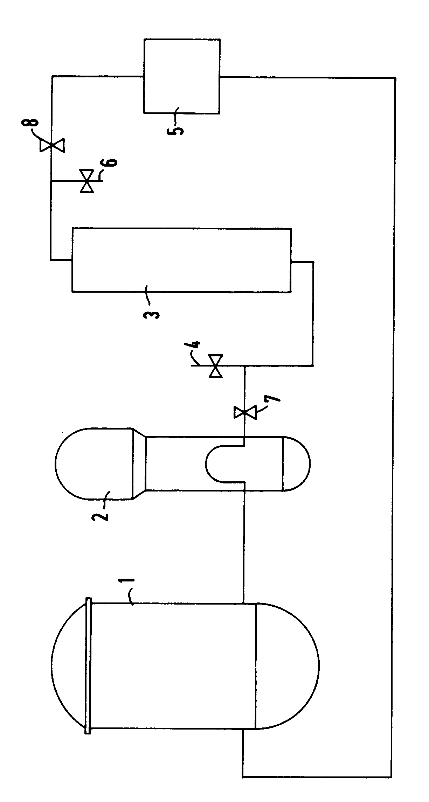

Anhand der Zeichnung wird ein apparativer Aufbau zur Durchführung des erfindungsgemäßen Verfahrens näher erläutert:

Die Zeichnung zeigt schematisiert einen Primärkreislauf eines Druckwasserreaktors mit einem Ionenaustauscher und mit Einrichtungen zur Veränderung der Kapazität des Ionenaustauschers.

Im Primärkreis eines Druckwasserreaktors ist ein Reaktor 1 und vereinfacht ein Dampferzeuger 2 angeordnet. Im Primärkreislauf befindet sich außerdem ein Ionenaustauscher 3 zur Reinigung des Primärkühlmittels. Der Ionenaustauscher 3 ist mit einer absperrbaren Zuleitung 4 verbunden. In Serie mit dem Ionenaustauscher 3 ist ein Entgaser 5 im Primärkreis angeordnet. Damit Antimon, das sich im Primärkreislauf befindet, nach dem erfindungsgemäßen Verfahren im Ionenaustauscher 3 aufgenommen wird, wird dem Ionenaustauscher 3 über die Zuleitung 4 Sauerstoff zugeleitet. Durch die Zugabe von Sauerstoff wird Antimon fünfwertig und wird dadurch im Ionenaustauscher 3 gebunden. Dem Primärkühlmittel wird der Sauerstoff im Entgaser 5 wieder entzogen. Wenn der Ionenaustauscher 3 mit Antimon gesättigt ist, wird eine erfindungsgemäße selektive Regeneration vorgenommen. Dazu wird, während das Primärkühlmittel durch einen nicht dargestellten anderen Ionenaustauscher strömt, dem Ionenaustauscher 3 über die Zuleitung 4 Wasserstoff zugeführt. Gleichzeitig wird über die Zuleitung 4 oder aus dem Primärkreis Wasser in den Ionenaustauscher 3 geleitet. Dabei ist eine im Primärkreis in Strömungsrichtung vor der Einmündung der Zuleitung 4 angeordnete erste Absperreinrichtung 7 ganz oder teilweise geschlossen. In Strömungsrichtung hinter dem Ionenaustauscher 3 befindet sich vor einer zweiten Absperreinrichtung 8 im Primärkreis abzweigend eine Ableitung 6 für die bei der Regeneration abströmende Flüssigkeit. Die Ableitung 6 ist für den Reinigungsbetrieb absperrbar. Durch die Zufuhr von Wasserstoff stellt sich die ursprüngliche Wertigkeit des Antimons wieder ein. Für Antimon dieser Wertigkeit ist aber die Kapazität des Ionenaustauschers 3 so gering, daß das Antimon vom Ionenaustauscher 3 abgegeben wird.

## Patentansprüche

1. Verfahren zum Verändern einer vorhandenen Kapazität eines Ionenaustauschers (3), insbesondere eines Ionenaustauschers (3), der zum Reinigen des Primärkühlmittels aus dem Primärkreis einer Druckwasser-Reaktoranlage eingesetzt ist, für ein bestimmtes chemisches Element, insbesondere für Antimon, **dadurch gekennzeichnet,** daß zur Steigerung der Kapazität des Ionenaustauschers (3) für das chemische Element das Redoxpotential des chemischen Elementes in einer zu reinigenden Flüssigkeit unmittelbar vor dem Ionenaustauscher (3) erhöht wird, wobei eine Umwandlung Von Kation in Anion oder umgekehrt ausgeschlossen sein soll, und daß dazu zugefügte Stoffe unmittelbar hinter dem Ionenaustaucher (3) entfernt werden.

2. Verfahren nach Anspruch 1, **dadurch gekennzeichnet,** daß zur Steigerung der Kapazität des Ionenaustauschers (3) für Antimon dieses unmittelbar vor dem Ionenaustauscher (3) fünfwertig gemacht wird.

3. Verfahren nach Anspruch 2, **dadurch gekennzeichnet,** daß zur Veränderung der Wertigkeit und des Redoxpotentials von Antimon der zu reinigenden Flüssigkeit unmittelbar vor dem Ionenaustauscher (3) Sauerstoff zugeführt und unmittelbar hinter dem Ionenaustauscher (3) entfernt wird.

4. Verfahren nach Anspruch 2, **dadurch gekennzeichnet,** daß zur Veränderung der Wertigkeit und des Redoxpotentials von Antimon der zu reinigenden Flüssigkeit unmittelbar vor dem Ionenaustauscher (3) Wasserstoffperoxid zugeführt und unmittelbar hinter dem Ionenaustauscher (3) entfernt wird.

5. Verfahren nach Anspruch 3, **dadurch gekennzeichnet,** daß hinter dem Ionenaustauscher (3) der Sauerstoff in einem Entgaser (5) wieder entzogen wird.

6. Verfahren zum Verändern einer vorhandenen Kapazität eines Ionenaustauschers (3), insbesondere eines Ionenaustauschers (3), der zum Reinigen des Primärkühlmittels aus dem Primärkreis einer Druckwasser-Reaktoranlage eingesetzt ist, für ein bestimmtes chemisches Element, insbesondere für Antimon, **dadurch gekennzeichnet,** daß zur Verringerung der Kapazität des Ionenaustauschers (3) zum Zweck der selektiven Regeneration des mit dem chemischen Element gesättigten Ionenaustauschers (3) das Redoxpotential des chemischen Elementes im Ionenaustauscher (3) verringert wird, wobei eine Umwandlung von Kation in Anion oder umgekehrt ausgeschlossen sein soll.

7. Verfahren nach Anspruch 6, **dadurch gekennzeichnet,** daß zur selektiven Regeneration des Ionenaustauschers (3) hinsichtlich Antimon dieses im Ionenaustauscher (3) wieder auf seine ursprüngliche Wertigkeit gebracht wird.

8. Verfahren nach Anspruch 7, **dadurch gekennzeichnet,** daß zum Einstellen der ursprünglichen Wertigkeit des Antimons durch den Ionenaustauscher (3) eine Flüssigkeit geleitet wird, der vor dem Ionenaustauscher (3) Wasserstoff zugeführt wird und daß die Flüssigkeit hinter dem Ionenaustauscher (3) abgeleitet wird.

9. Verfahren nach Anspruch 7, **dadurch gekennzeichnet,** daß zum Einstellen der ursprünglichen Wertigkeit des Antimons durch den Ionenaustauscher (3) eine Flüssigkeit geleitet wird, der vor dem Ionenaustauscher (3) Hydrazin zugeführt wird und daß die Flüssigkeit hinter dem Ionenaustauscher (3) abgeleitet wird.

10. Verfahren nach den Ansprüchen 8 oder 9, **dadurch gekennzeichnet,** daß während der selektiven Regeneration durch den Ionenaustauscher (3) als Spülflüssigkeit Primärkühlmitel geleitet wird.

## Claims

1. Process for varying an existing capacity of an ion exchanger (3), in particular of an ion exchanger (3) which is used for cleaning the primary coolant from the primary circuit of a pressurized-water reactor installation, for a particular chemical element, in particular for antimony, characterized in that to increase the capacity of the ion exchanger (3) for the chemical element the redox potential of the chemical element in a liquid to be cleaned is increased directly upstream of the ion exchanger (3), whereby a conversion from cation into anion or vice versa should be excluded, and in that substances added thereto are removed directly downstream of the ion exchanger (3).

2. Process according to claim 1, characterized in that to increase the capacity of the ion exchanger (3) for antimony the latter is made pentavalent directly upstream of the ion exchanger (3).

3. Process according to claim 2, characterized in that to change the valency and the redox potential of antimony, oxygen is supplied to the liquid to be cleaned directly upstream of the ion exchanger (3) and is removed directly downstream of the ion exchanger (3).

4. Process according to claim 2, characterized in that to change the valency and the redox potential of antimony, hydrogen peroxide is supplied to the liquid to be cleaned directly upstream of the ion exchanger (3) and is removed directly downstream of the ion exchanger (3).

5. Process according to claim 3, characterized in that downstream of the ion exchanger (3) the oxygen is removed again in a gas expeller (5).

6. Process for varying an existing capacity of an ion exchanger (3), in particular of an ion exchanger (3) which is used for cleaning the primary coolant from the primary circuit of a pressurized-water reactor installation, for a particular chemical element, in particular for antimony, characterized in that to reduce the capacity of the ion exchanger (3) for the purpose of the selective regeneration of the ion exchanger (3) saturated with the chemical element, the redox potential of the chemical element in the ion exchanger (3) is reduced, whereby a conversion from cation into anion or vice versa should be excluded.

7. Process according to claim 6, characterized in that for the selective regeneration of the ion exchanger (3) with regard to antimony the latter in the ion exchanger (3) is returned to its original valency.

8. Process according to claim 7, characterized in that for the adjustment of the original valency of the antimony a liquid is conducted through the ion exchanger (3), to which liquid hydrogen is supplied upstream of the ion exchanger (3) and in that the liquid is conducted away downstream of the ion exchanger (3).

9. Process according to claim 7, characterized in that for the adjustment of the original valency of the antimony a liquid is conducted through the ion exchanger (3), to which liquid hydrazine is supplied upstream of the ion exchanger (3) and in that the liquid is conducted away downstream of the ion exchanger (3).

10. Process according to claims 8 or 9, characterized in that during the selective regeneration primary coolant is conducted through the ion exchanger (3) as flushing liquid.

## Revendications

1. Procédé pour modifier la capacité actuelle d'un échangeur d'ions (3), notamment d'un échangeur d'ions (3) qui est utilisé pour épurer l'agent de refroidissement primaire sortant du circuit primaire d'une installation d'un réacteur à eau sous pression, pour un élément chimique déterminé, notamment pour l'antimoine, caractérisé en ce qu'il consiste, pour augmenter la capacité de l'échangeur d'ions pour l'élément chimique, à augmenter le potentiel Redox de l'élément chimique dans un liquide à épurer, immédiatement en amont de l'échangeur d'ions- (3), toute transformation de cation en anion ou inversement devant être exclue, et à éliminer la substance ajoutée à cet effet, immédiatement en aval de l'échangeur d'ions (3).

2. Procédé suivant la revendication 1, caractérisé en ce qu'il consiste, pour augmenter la capacité de l'échangeur d'ions (3) pour l'antimoine, à rendre celui-ci pentavalent, immédiatement en amont de l'échangeur d'ions (3).

3. Procédé suivant la revendication 2, caractérisé en ce qu'il consiste, pour modifier la valence et le potentiel Redox de l'antimoine, à envoyer au liquide à épurer de l'oxygène, immédiatement en amont de l'échangeur d'ions (3), et à éliminer l'oxygène, immédiatement en aval de l'échangeur (3).

**4.** Procédé suivant la revendication 2, caractérisé en ce qu'il consiste, pour modifier la valence et le potentiel Redox de l'antimoine, à envoyer au liquide à épurer de l'eau oxygénée, immédiatement en amont de l'échangeur d'ions (3), et à éliminer l'eau oxygénée immédiatement en aval de l'échangeur d'ions (3).

**5.** Procédé suivant la revendication 3, caractérisé en ce qu'il consiste à enlever l'oxygène en aval de l'échangeur d'ions (3) dans un dégazeur (5).

**6.** Procédé pour modifier la capacité actuelle d'un échangeur d'ions (3), notamment d'un échangeur d'ions (3) qui est utilisé pour épurer l'agent de refroidissement primaire sortant du circuit primaire d'une installation d'un réacteur à eau sous pression, pour un élément chimique déterminé, notamment pour l'antimoine, caractérisé en ce qu'il consiste, pour diminuer la capacité de l'échangeur d'ions, en vue de la régénération sélective de l'échangeur d'ions (3) saturé de l'élément chimique, à diminuer le potentiel Redox de l'élément chimique dans l'échangeur d'ions (3), en excluant toute transformation de cation en anion ou inversement.

**7.** Procédé suivant la revendication 6, caractérisé en ce qu'il consiste, pour la régénération sélective d'échangeur d'ions concernant l'antimoine, à faire repasser celui-ci dans l'échangeur d'ions à sa valence d'origine.

**8.** Procédé suivant la revendication 7, caractérisé en ce qu'il consiste, pour régler la valence d'origine de l'antimoine, à envoyer dans l'échangeur d'ions (3) un liquide auquel est ajouté de l'hydrogène, en amont de l'échangeur d'ions (3), et à évacuer le liquide en aval de l'échangeur d'ions (3).

**9.** Procédé suivant la revendication 7, caractérisé en ce qu'il consiste, pour régler la valence d'origine de l'antimoine, à envoyer dans l'échangeur d'ions (3) un liquide auquel est ajoutée de l'hydrazine, en amont de l'échangeur d'ions, et à évacuer le liquide en aval de l'échangeur d'ions, et à évacuer le liquide en aval de l'échangeur d'ions.

**10.** Procédé suivant la revendication 8 ou 9, caractérisé en ce qu'il consiste, pendant la régénération sélective, à envoyer dans l'échangeur d'ions (3) de l'agent de refroidissement primaire comme liquide de rinçage.